# EUROPÄISCHE PATENTSCHRIFT

(11) **EP 1 322 510 B1**
(45) Veröffentlichungstag und Bekanntmachung des Hinweises auf die Patenterteilung: **21.04.2004**
(21) Anmeldenummer: 01986652.4
(22) Anmeldetag: 28.09.2001
(51) Int. Cl.: B60T 13/575

(54) **PNEUMATISCHER BREMSKRAFTVERSTÄRKER MIT VERÄNDERLICHEM KRAFTÜBERSETZUNGSVERHÄLTNIS**
BRAKE BOOSTER COMPRISING VARIABLE RESPONSE FORCE RATIO
SERVOFREIN PNEUMATIQUE A RAPPORT DE DEMULTIPLICATION DE FORCE VARIABLE

(30) Priorität: 04.10.2000 DE 10049106
(43) Veröffentlichungstag der Anmeldung: 02.07.2003
(73) Patentinhaber: Lucas Automotive GmbH, 56070 Koblenz (DE)
(72) Erfinder: ZINNDORF, Albert, 56237 Sessenbach (DE); PUSCHER, Gerd, 56626 Andernach (DE)
(74) Vertreter: Beyer, Andreas, Dr.
(86) Internationale Anmeldenummer: PCT/EP2001/011256
(87) Internationale Veröffentlichungsnummer: WO 2002/030725

(56) Entgegenhaltungen:
- EP-A- 0 705 190
- DE-A- 4 020 904

## Beschreibung

Die Erfindung betrifft einen pneumatischen Bremskraftverstärker, insbesondere für Kraftfahrzeuge, mit einem Steuerventil zum Steuern einer pneumatischen Druckdifferenz, einem Krafteingangsglied zur Betätigung des Steuerventils, einem Kraftabgabeglied zur Weiterleitung der Bremskraft, einer zwischen dem Kraftabgabeglied und dem Krafteingangsglied angeordneten Reaktionsscheibe aus Elastomermaterial und einer zwischen der Reaktionsscheibe und dem Krafteingangsglied angeordneten, auf die Reaktionsscheibe wirkenden Einrichtung zur Änderung des Kraftübersetzungsverhältnisses zwischen dem Krafteingangsglied und dem Kraftabgabeglied in Abhängigkeit von der auf das Krafteingangsglied ausgeübten Kraft, wobei die Einrichtung einen inneren Kolben und einen den inneren Kolben radial außen umgebenden und relativ zum inneren Kolben verschiebbaren äußeren Kolben umfasst.

Ein solcher, als Unterdruckbremskraftverstärker für ein Kraftfahrzeug ausgebildeter Bremskraftverstärker ist aus der EP 0 705 190 B1 bekannt.

Normalerweise haben pneumatische Bremskraftverstärker ein festes Kraftübersetzungsverhältnis, d.h. eine mittels des Eingangsgliedes in den Bremskraftverstärker eingeleitete Betätigungskraft wird von einer dem Eingangsglied zugeordneten, kleineren Fläche auf eine dem Kraftabgabeglied zugeordnete, größere Fläche übertragen. Dies geschieht zumeist unter Zwischenschaltung einer sich flüssigkeitsähnlich verhaltenden, sogenannten Reaktionsscheibe aus Elastomermaterial. Unter bestimmten Umständen, beispielsweise in einer Notbremssituation, ist es jedoch erwünscht, einem Benutzer eine möglichst hohe Bremskraftunterstützung zur Verfügung zu stellen, damit ausgehend von einer bestimmten Eingangskraft ein möglichst hoher Bremsdruck erzeugt werden kann.

In der genannten EP 0 705 190 B1 ist deshalb vorgeschlagen, mittels der Einrichtung zur Änderung des Kraftübersetzungsverhältnisses die auf die Reaktionsscheibe wirkende Fläche nach Überschreiten einer bestimmten Eingangskraft zu verkleinern. Diese verkleinerte Fläche dringt verglichen mit der nicht verkleinerten Fläche (bei gleicher Eingangs- oder Betätigungskraft) weiter in die elastische Reaktionsscheibe ein, so dass das Steuerventil des Bremskraftverstärkers entsprechend weiter öffnet, woraus ein entsprechend höherer Differenzdruck im Bremskraftverstärker und damit eine erhöhte Kraftverstärkung resultiert.

Bei dem aus der EP 0 705 190 B1 bekannten Bremskraftverstärker wirken der innere Kolben und der äußere Kolben der Einrichtung zur Änderung des Kraftübersetzungsverhältnisses unmittelbar auf die Reaktionsscheibe ein. Aufgrund des unmittelbaren Einwirkens der beiden Kolben auf die Reaktionsscheibe entsteht ein feiner Abrieb aus Elastomermaterial. Ein für die zuverlässige Funktion der Einrichtung zur Änderung des Kraftübersetzungsverhältnisses erforderlicher Spalt zwischen einem Anschlag für den äußeren Kolben und der diesem Anschlag zugewandten Oberfläche des äußeren Kolbens wird durch den sich innerhalb der Einrichtung zur Änderung des Kraftübersetzungsverhältnisses festsetzenden Abrieb zunehmend aufgebraucht. Ist der Spalt vollständig aufgebraucht, kann nach einer Bremsung mit hohem Bremsdruck der Bremsdruck nicht mehr kontrolliert zurückgenommen werden. Vielmehr endet eine vom Bremskraftverstärker erzeugte Bremskraftunterstützung erst dann, wenn die vom Fahrer aufgebrachte Eingangskraft stark reduziert wird. Dies ist darauf zurückzuführen, dass bei aufgebrauchtem Spalt die auf den äußeren Kolben wirkenden hydraulischen Rückwirkkräfte nicht in das Krafteingangsglied, sondern vollständig in das Steuerventilgehäuse eingeleitet werden.

Die Tatsache, dass sich trotz einer Reduzierung der vom Fahrer aufgebrachten Eingangskraft die Bremswirkung kaum ändert, wird vom Fahrer als Verschlechterung des Betätigungsverhaltens der Fahrzeugbremsen wahrgenommen. Der Fahrer bekommt den Eindruck, dass sein Einfluss auf das Verhalten der Fahrzeugbremsen abnimmt, was zu kritischen Fahrsituationen führen kann.

Der Erfindung liegt die Aufgabe zugrunde, einen pneumatischen Bremskraftverstärker der eingangs genannten Art bereitzustellen, dessen Betätigungsverhalten weniger stark abhängig von Verschleißerscheinungen ist.

Ausgehend von einem Bremskraftverstärker der genannten Art ist diese Aufgabe erfindungsgemäß einerseits dadurch gelöst, dass der innere Kolben radial außen eine vom äußeren Kolben abgedeckte Vertiefung zur Aufnahme von Materialpartikeln aufweist, und andererseits dadurch, dass der äußere Kolben radial innen eine vom inneren Kolben abgedeckte Vertiefung zur Aufnahme von Materialpartikeln besitzt. Materialpartikel, welche entgegen der Betätigungsrichtung wandern und beispielsweise auf den Verschleiß der Reaktionsscheibe zurückzuführen sind, werden folglich in der Vertiefung gesammelt, bevor sie sich innerhalb der Einrichtung zur Änderung des Kraftübersetzungsverhältnisses ablagern können. Der Einfluss von Materialpartikeln auf die Funktion der Einrichtung zur Änderung des Kraftübersetzungsverhältnisses wird damit nachhaltig reduziert. Aus diesem Grund reduziert sich auch die Verschleißabhängigkeit des Betätigungsverhaltens der Fahrzeugbremsen.

Die Vertiefung zur Aufnahme von Materialpartikeln ist bezüglich des inneren Kolbens und des äußeren Kolbens zweckmäßigerweise derart angeordnet, dass die Vertiefung in allen Funktionsstellungen der Einrichtung zur Änderung des Kraftübersetzungsverhältnisses abgedeckt ist. So kann die Vertiefung beispielsweise in einem solchen Bereich des äußeren Kolbens ausgebildet sein, dass sie ständig, d. h. in allen Funktionsstellungen, vom inneren Kolben abgedeckt ist. Vorzugsweise ist in diesem Fall die Vertiefung in einem vorderen, der Reaktionsscheibe zugewandten Bereich des äußeren Kolbens ausgebildet. Entsprechendes gilt, wenn der innere Kolben mit einer Vertiefung versehen ist. In diesem Fall sollte die Vertiefung jedoch in einem hinteren, der Reaktionsscheibe abgewandten Bereich des inneren Kolbens vorgesehen sein. Auf diese Weise kann erreicht werden, dass Materialpartikel, welche in die Vertiefung gelangt sind, dort auch verbleiben. Einem unbeabsichtigten Entweichen der gesammelten Materialpartikel wird damit entgegengewirkt.

Vorzugsweise ist die Vertiefung nutartig ausgebildet, beispielsweise als eine vollständig oder zumindest bereichsweise in Umfangsrichtung eines der Kolben verlaufende Nut. Eine solche Ausgestaltung der Vertiefung gewährleistet in besonderen Maße, dass wandernde Materialpartikel zuverlässig innerhalb der Vertiefung gesammelt werden können. Die Dimensionen der Vertiefung sind vorteilhafterweise derart gewählt, dass die über die Lebensdauer des Bremskraftverstärkers maximal anfallende Menge an Materialpartikeln aufgenommen werden kann.

Der innere Kolben kann an seinem dem Krafteingangsglied zugewandtem Ende mit einem zum Beispiel zylindrisch ausgestalteten Stößel verbunden sei. Es besteht dann die Möglichkeit, den äußeren Kolben auf einem Schaft des Stößels gleitend verschiebbar zu führen. Eine solche Ausbildung erspart eine separate Führung des äußeren Kolbens und führt zu einer kompakten Bauweise. Der Stößel und der innere Kolben sind vorzugsweise einstückig ausgeführt.

Zur weiteren Vereinfachung des konstruktiven Aufbaus und zur Verkleinerung der Einrichtung zur Änderung des Übersetzungsverhältnisses ist bei bevorzugten Ausführungsformen des erfindungsgemäßen Bremskraftverstärker der Stößelschaft an seinem dem Krafteingangsglied zugewandten Ende mit einem Teller versehen, an dem sich ein den inneren Kolben gegen einen am äußeren Kolben ausgebildeten Anschlag vorspannendes elastisches Element abstützen kann. Der die axiale Verschieblichkeit des inneren Kolbens entgegen der Betätigungsrichtung begrenzende Anschlag ist vorzugsweise radial innen am hohlzylindrischen äußeren Kolben angeordnet.

Das den äußeren Kolben in seine Ausgangsstellung vorspannende elastische Element kann eine lineare Federkennlinie haben. Ebenso kann das elastische Element jedoch eine progressiv ansteigende Federkennlinie aufweisen, wodurch die Bremskraftunterstützung des erfindungsgemäßen Bremskraftverstärkers sich beginnend mit der Bewegung des äußeren Kolbens aus seiner Ausgangsstellung bis zum Erreichen einer Endstellung des äußeren Kolbens progressiv erhöht.

Vorteilhafterweise ist der Außendurchmesser des äußeren Kolbens größer als der Innendurchmesser des Tellers gewählt, so dass sich der äußere Kolben auf einfache Weise an dem Anschlag für den äußeren Kolben, welcher beispielsweise am Steuerventilgehäuse ausgebildet ist, abstützen kann. Obwohl der Teller auch einstückig mit dem Stößelschaft ausgebildet sein kann, ist das Vorsehen von Teller und Schaft als getrennte Bauelemente bevorzugt. Das Vorsehen von Teller und Schaft als getrennte Bauelemente gestattet eine besonders einfache Montage der Einrichtung zur Änderung des Übersetzungsverhältnisses. Dies wird später anhand der Zeichnungen näher erläutert.

Gemäß einer bevorzugten Ausführungsform der Erfindung ist die Einrichtung zur Änderung des Kraftübersetzungsverhältnisses als eine Patrone ausgeführt, welche nach erfolgter Vormontage in das Steuerventilgehäuse einsetzbar ist. Die Patrone lässt sich ohne großen Aufwand in viele bereits existierende Bremskraftverstärker integrieren. Weiterhin besteht die Möglichkeit, ein und den selben Bremskraftverstärker mit und ohne veränderlicher Kraftübersetzung anzubieten, indem die Patrone in den Bremskraftverstärker eingebaut wird oder nicht.

Ein Ausführungsbeispiel eines erfindungsgemäßen Bremskraftverstärkers wird im folgenden anhand der beigefügten, schematischen Figuren näher erläutert. Es zeigt:
- Figur 1: einen erfindungsgemäßen Bremskraftverstärker gemäß einem ersten Ausführungsbeispiel mit einer Einrichtung zur Änderung des Kraftübersetzungsverhältnisses zwischen Krafteingangsglied und Kraft-Abgabeglied im Längsschnitt;
- Figur 2: einen die Einrichtung zur Änderung des Kraftübersetzungsverhältnisses vergrößert wiedergebenden Ausschnitt aus Fig. 1, wobei die Einrichtung in einem Zustand dargestellt ist, wie er sich bei unbetätigtem Bremskraftverstärker einstellt;
- Figur 3: eine gegenüber der in den Figuren 1 und 2 dargestellten Einrichtung leicht abgewandelte Einrichtung zur Änderung des Kraftübersetzungsverhältnisses in Gestalt einer vormontierten Patrone im Längsschnitt;
- Figur 4: eine Einrichtung zur Änderung des Kraftübersetzungsverhältnisses, welche zur Montage in einen Bremskraftverstärker gemäß einem zweiten Ausführungsbeispiel der Erfindung vorgesehen ist, in einer Ansicht gemäß Figur 3; und.
- Figur 5: ein Diagramm, welches das sich in Abhängigkeit von der vom Fahrer aufgebrachten Eingangskraft ändernde Übersetzungsverhältnis der erfindungsgemäßen Bremskraftverstärker sowie das durch Verschleißerscheinungen geprägte Übersetzungsverhältnis eines Bremskraftverstärkers des Stands der Technik wiedergibt.

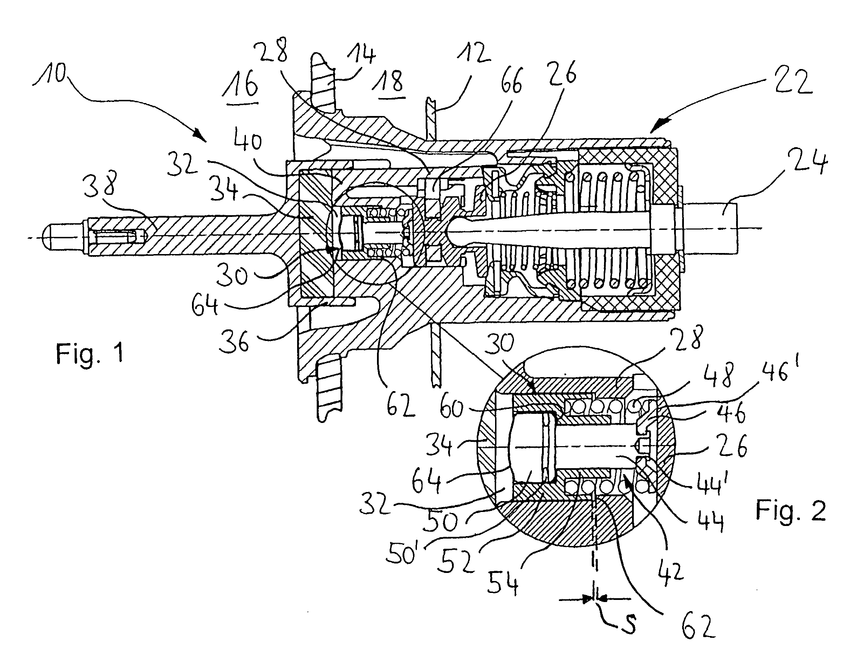

Fig. 1 zeigt im Längsschnitt ein erstes Ausführungsbeispiel eines erfindungsgemäßem Unterdruckbremskraftverstärkers 10 mit einem Gehäuse 12, das durch eine bewegliche Wand 14 in eine Unterdruckkammer 16 und eine Arbeitskammer 18 unterteilt ist. Während die Unterdruckkammer 16 im Betrieb des Bremskraftverstärkers 10 ständig mit einer Unterdruckquelle in Verbindung steht, kann die Arbeitskammer 18 wahlweise entweder mit Unterdruck oder mit Atmosphärendruck in Verbindung gebracht werden. Hierzu dient ein Steuerventil 22, das in Abhängigkeit der Betätigung eines Krafteingangsgliedes 24, welches üblicherweise mit einem hier nicht dargestellten Bremspedal verbunden ist, im Steuerventil 22 vorhandene Ventilsitze so steuert, dass Atmosphärendruck oder Überdruck in die Arbeitskammer 18 einströmen kann, oder dass bei Beendigung einer Betätigung des Bremskraftverstärkers 10 die Unterdruckkammer 16 in Verbindung mit der Arbeitskammer 18 gebracht wird, um letztere wieder zu evakuieren. Der Aufbau und die Funktion eines solchen Bremskraftverstärkers 10 sind Fachleuten auf diesem Gebiet gut bekannt und es werden deshalb im folgenden nur diejenigen Teile und deren Funktion näher beschrieben, die für die vorliegende Erfindung von Interesse sind.

Das bereits erwähnte Krafteingangsglied 24 ist mit einem Ventilkolben 26 verbunden, der in einem Gehäuse 28 des Steuerventils 22 axial verschieblich aufgenommen ist. Auf der dem Krafteingangsglied 24 axial gegenüberliegenden Seite des Ventilkolbens 26 schließt sich eine im folgenden noch näher erläuterte Einrichtung 30 zur Änderung des Kraftübersetzungsverhältnisses an, die als eine vormontierte Patrone bezogen auf die Figuren von links her in eine gestufte Ausnehmung 32 des Steuerventilgehäuses 28 eingesetzt ist. An diese Einrichtung 30 schließt sich in Betätigungsrichtung eine Reaktionsscheibe 34 an, die aus Elastomermaterial besteht und in einem becherförmig erweiterten Endabschnitt 36 eines Kraftabgabegliedes 38 des Bremskraftverstärkers 10 aufgenommen ist. Das Kraftabgabeglied 38 ist mittels seines becherförmigen Endabschnittes 36 auf einem nabenförmigen Endabschnitt 40 des Steuerventilgehäuses 28 geführt.

Bei einer Betätigung des Bremskraftverstärkers 10 bewirkt eine auf das Krafteingangsglied 24 ausgeübte Betätigungskraft eine Verschiebung desselben nach links, d.h. in den Bremskraftverstärker 10 hinein. Diese Verschiebung wird auf den mit dem Krafteingangsglied 24 gekoppelten Ventilkolben 26 übertragen und führt zur Öffnung desjenigen Ventilsitzes, der Atmosphärendruck in die Arbeitskammer 18 einströmen lässt. Der Ventilkolben 26 überträgt die genannte Verschiebung mittels der Einrichtung 30 zur Änderung des Kraftübersetzungsverhältnisses auf die Reaktionsscheibe 34, deren Verhalten sich idealisiert mit dem Verhalten einer hydraulischen Flüssigkeit vergleichen lässt. Das bedeutet, dass die auf das Krafteingangsglied 24 ausgeübte Kraft von der kleineren Querschnittsfläche der Einrichtung 30 mittels der Reaktionsscheibe 34 auf die vom Innendurchmesser des becherförmigen Endabschnittes 36 definierte größere Querschnittsfläche des Kraftabgabegliedes 38 übertragen wird. Das Verhältnis der kleineren Querschnittsfläche der Einrichtung 30 zur größeren Querschnittsfläche der Reaktionsscheibe 34 definiert das Kraftübersetzungsverhältnis des Bremskraftverstärkers 10.

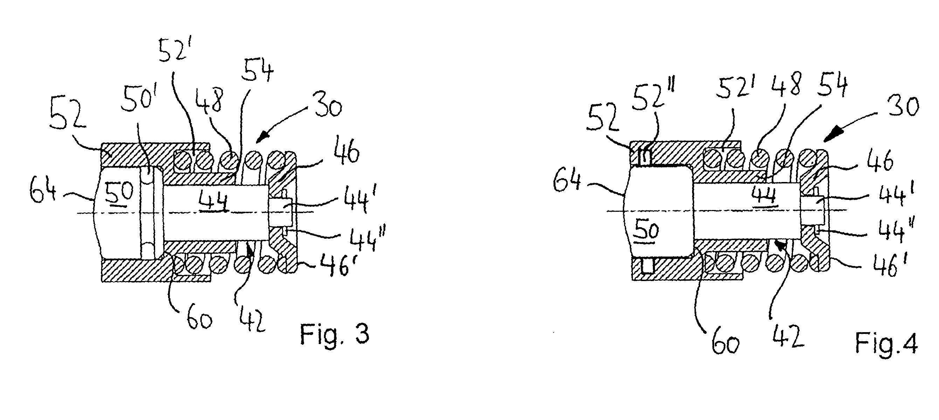

Die Einrichtung 30 zur Änderung dieses Kraftübersetzungsverhältnisses wird unter Bezugnahme auf die Figuren 2 und 3 nun näher beschrieben. Sie umfasst einen Stößel 42 mit einem Schaft 44, dessen dem Krafteingangsglied 24 zugewandtes Ende mit einem Teller 46 verbunden ist. Der Teller 46 dient zum einen der Kraftübertragung von dem Ventilkolben 26 auf die Einrichtung 30 und zum anderen zum Abstützen einer koaxial zum Stößelschaft 44 angeordneten und den Stößelschaft 44 umgebenden Druckfeder 48. Der Stößelschaft 44 und der Teller 46 sind als separate Komponenten ausgeführt, um die Montage der Einheit 30 zur Änderung des Kraftübersetzungsverhältnisses zu erleichtern.

In der Mitte des Tellers 46 ist eine kreisrunde Öffnung vorgesehen, durch welche sich ein zylindrischer Fortsatz 44' des Stößelschafts 44 mit einem geringeren Außendurchmesser als der Stößelschaft 44 erstreckt. Das Befestigen des Tellers 46 am Stößelschaft 44 kann auf unterschiedliche Weise geschehen. Gemäß Fig. 2 ist der Fortsatz 44' hohlzylindrisch ausgebildet, so dass ein Befestigen des Tellers 46 am Stößelschaft 44 durch Umbördeln erfolgen kann. Wie in Fig. 3 dargestellt, kann das Befestigen des Tellers 46 am Stößelschaft 44 auch mittels eines den Teller 46 hintergreifenden Sicherungsrings 44'' erfolgen.

Der Teller 46 ist jeweils muldenförmig ausgestaltet und besitzt einen sich in Richtung auf das Krafteingangsglied 24 erstreckenden und mit dem Ventilkolben 26 zusammenwirkenden Ringbund 46'. Die muldenförmige Ausgestaltung des Tellers 46 und das Vorsehen eines mit dem Krafteingangsglied 24 zusammenwirkenden Ringbunds 46' ermöglichen eine zuverlässige Krafteinleitung vom Ventilkolben 26 in den Teller 46 bzw. in die Einheit 30 zur Änderung des Kraftübersetzungsverhältnisses, ohne dass der zur Anbindung des Tellers an den Stößelschaft 44 dienende Fortsatz 44' mit einer Kraft beaufschlagt würde.

Am dem dem Teller 46 abgewandten Ende des Stößelschaftes 44 ist ein zylindrischer, kreisrunder innerer Kolben 50 angeordnet, der einen Teil der auf die Reaktionsscheibe 34 wirkenden Querschnittsfläche der Einrichtung 30 bildet. Im Ausführungsbeispiel sind der Stößel 42 und der äußere Kolben 50 einstückig ausgestaltet. Koaxial zu diesem inneren Kolben 50 ist ein hohlzylindrischer äußerer Kolben 52 angeordnet, der mittels eines Kragens 54 gleitend verschiebbar auf dem Stößelschaft 44 geführt ist und dessen Innendurchmesser im Bereich des inneren Kolbens 50 bis auf übliche Toleranzen dem Außendurchmesser des inneren Kolbens 50 entspricht. Der Außendurchmesser des äußeren Kolbens 52 ist größer als der Außendurchmesser des Tellers 46 und entspricht im wesentlichen dem größten Durchmesser der gestuften Ausnehmung 32 im Steuerventilgehäuse 28.

Der innere Kolben 50 weist radial außen eine Vertiefung in Gestalt einer umlaufenden Nut 50' auf. Die Nut 50' dient zur Aufnahme von entgegen der Betätigungsrichtung des Bremskraftverstärkers wandernden Materialpartikeln und insbesondere von Verschleißpartikeln der Reaktionsscheibe 34, welche sich ansonsten an einem für den inneren Kolben 50 vorgesehenen, im hohlzylindrischen äußeren Kolben 52 ausgebildeten Anschlag 60 ablagern und die Funktionsfähigkeit der Einheit 30 zur Änderung des Kraftübersetzungsverhältnisses beeinträchtigen würden. Die Nut 50' ist an einem dem Krafteingangsglied 24 zugewandten Ende des inneren Kolbens 50 ausgebildet und derart dimensioniert, dass sie eine lange Betriebsfähigkeit des Bremskraftverstärkers 10 gewährleistet und dass auf Verstopfungen der Nut 50' zurückzuführende Materialspannungen im inneren Kolben 50 vermieden werden.

In Fig. 3 ist die Einheit 30 zur Änderung des Kraftübersetzungsverhältnisses als separate Baugruppe in Gestalt einer vormontierten Patrone dargestellt. Bei der Montage der Einheit 30 wird zunächst der Stößelschaft 44 durch den Kragen 54 des äußeren Kolbens 52 geführt, bis der einstückig mit dem Stößelschaft 44 ausgebildete innere Kolben 50 in Anlage mit dem radial innen am äußeren Kolben 52 ausgebildeten Anschlag 60 gelangt. Daraufhin wird die Druckfeder 48 von der dem inneren Kolben 50 abgewandten Seite auf den Kragen 54 aufgeschoben und dabei teilweise innerhalb einer nutförmigen Vertiefung 52' des äußeren Kolbens 52 aufgenommen. Im Anschluss daran wird der Teller 46 entgegen der Federkraft der Druckfeder 48 auf den Fortsatz 44' des Stößelschafts 44 geschoben und wie oben erläutert mit dem Stößelschaft 44 verbunden. Mittels der vorgespannten, sich am Teller 46 abstützenden Druckfeder 48 wird der innere Kolben 50 in seiner Ausgangsstellung gegen den Anschlag 60 des äußeren Kolbens 52 vorgespannt.

In der in den Figuren 1 bis 3 dargestellten und durch den Anschlag 60 festgelegten Ausgangsstellung der Einrichtung 30 bilden die der Reaktionsscheibe 34 zugewandten Flächen des inneren Kolbens 50 und des äußeren Kolbens 52 eine einzige bündige Fläche. In der Ausgangsstellung des Bremskraftverstärkers besteht zwischen dem von der Reaktionsscheibe 34 abgewandten Ende des äußeren Kolbens 52 und dem durch eine Durchmesserverkleinerung der Ausnehmung 32 gebildeten Anschlag 62 für den äußeren Kolben ein gewisser axialer Abstand s.

In Figur 4 ist eine weitere Ausgestaltungsmöglichkeit einer Einheit 30 zur Änderung des Kraftübersetzungsverhältnisses für einen Unterdruckbremskraftverstärker gemäß einem zweiten Ausführungsbeispiel der Erfindung dargestellt. Sowohl der Unterdruckbremskraftverstärker gemäß dem zweiten Ausführungsbeispiel als auch die in Figur 4 dargestellte Einheit 30 zur Änderung des Kraftübersetzungsverhältnisses stimmen funktionell mit dem Unterdruckbremskraftverstärker 10 und der Einheit 30 zur Änderung des Kraftübersetzungsverhältnisses gemäß den Figuren 1 bis 3 überein.

Abweichend hiervon ist bei der in Figur 4 dargestellten Einheit 30 zur Änderung des Kraftübersetzungsverhältnisses die Vertiefung in Gestalt einer Nut 52" radial innen am äußeren Kolben 52 ausgebildet. Diese Nut 52" ist bezüglich der in Figur 4 nicht dargestellten Reaktionsscheibe in einem vorderen, der nicht abgebildeten Reaktionsscheibe zugewandten Bereich des äußeren Kolbens 52 angeordnet. Im Gegensatz hierzu ist die in Figur 3 dargestellte und radial außen am inneren Kolben 50 ausgebildete Nut 50' in einem der Reaktionsscheibe 34 abgewandten Bereich des inneren Kolben 50 angeordnet. Mittels des Ausbildens der Nut 52" bezüglich der Reaktionsscheibe vorne am äußeren Kolben 52 und der Nut 50' hinten am inneren Kolben 50 wird gewährleistet, dass jede der Nuten 50', 52" in allen Funktionsstellungen der jeweiligen Einheit 30 zu Änderung des Kraftübersetzungsverhältnisses von dem jeweils gegenüberliegenden Kolben 50, 52 abgedeckt ist. Ein unbeabsichtigtes Entweichen der gesammelten Materialpartikel kann somit ausgeschlossen werden.

Die Funktion der jeweils unter Bezugnahme auf Fig. 3 und Fig. 4 erläuterten Einheit 30 zur Änderung des Kraftübersetzungsverhältnisses in Abhängigkeit von der mittels des Ventilkolbens 26 auf sie ausgeübten Kraft ist wie folgt: Wird das nicht dargestellte, mit dem Krafteingangsglied 24 gekoppelte Bremspedal niedergedrückt, überträgt sich diese Bewegung von dem Krafteingangsglied 24 auf den Ventilkolben 26 und von diesem auf den Teller 46. Dabei verschiebt sich die gesamte Einheit 30 nach links, wobei zunächst eine auf dem inneren Kolben 50 vorhandene, kugelsegmentförmige Erhebung 64 in die Reaktionsscheibe 34 eindringt.

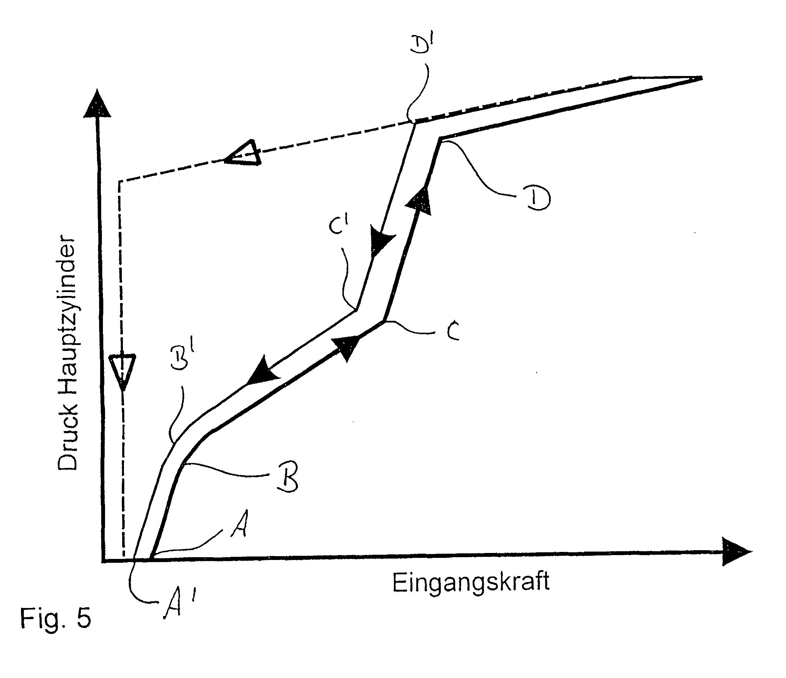

Aufgrund der zu Beginn sehr kleinen Kontaktfläche zwischen der Erhebung 64 und der Reaktionsscheibe 34 kann der Kolben 50 relativ schnell in die Reaktionsscheibe 34 eindringen, was in der Anfangsphase einer Betätigung des Bremskraftverstärkers zu einem schnellen Öffnen des Steuerventils 22 und damit zum schnellen Aufbau einer Bremskraftunterstützung führt. In dem Diagramm der Fig. 5, das den Bremsdruck in einem von dem Kraftabgabeglied 38 beaufschlagten, hier nicht dargestellten Hauptzylinder aufgetragen über der mittels des Krafteingangsgliedes 24 eingeleiteten Eingangskraft darstellt, ist dies an dem nach Überwindung eines Anfangsspieles (Punkt A) steilen Anstieg des Hauptzylinderdrucks zu erkennen (Strecke zwischen den Punkten A und B).

Eine weitere Verschiebung des Krafteingangsgliedes 24 führt nach kurzer Zeit zu einem vollflächigen Anliegen sowohl des inneren Kolbens 50 als auch des äußeren Kolbens 52 an der Reaktionsscheibe 34. Die Einheit 30 ist dabei insgesamt nach links verschoben worden, was sich an einem nun größeren Abstand s zwischen dem Anschlag 62 und dem äußeren Kolben 52 zeigt. Der mittlerweile in dem nicht dargestellten Hauptzylinder aufgebaute und über das Kraftabgabeglied 38 zurückwirkende Bremsdruck führt dazu, das das Material der Reaktionsscheibe 34 etwas in die Ausnehmung 32 gepresst wird. Die über die Reaktionsscheibe 34 auf den äußeren Kolben 52 übertragene Rückwirkkraft reicht jedoch noch nicht dazu aus, um die Druckfeder 48 zu komprimieren. In diesem Zustand ist daher das Kraftübersetzungsverhältnis des Bremskraftverstärkers 10 gegeben durch das Verhältnis des Außendurchmessers des äußeren Kolbens 52 zum Innendurchmesser des die Reaktionsscheibe 34 aufnehmenden, becherförmigen Endabschnittes 36.

Bei einer weiteren Erhöhung der mittels des Krafteingangsgliedes 24 aufgebrachten Eingangskraft wird der über den Stößel 42 starr mit dem Ventilkolben 26 verbundene innere Kolben 50 der Einheit 30 weiter nach links verschoben und damit tiefer in die Reaktionsscheibe 34 hinein gedrückt. Der entsprechend höhere, im Hauptzylinder erzielte Bremsdruck wirkt über die Reaktionsscheibe 34 auch auf den äußeren Kolben 52 zurück und reicht nun dazu aus, die Druckfeder 48 zu komprimieren. Der äußere Kolben 52 verschiebt sich infolge dessen relativ zum inneren Kolben 50 entgegen der Betätigungsrichtung des Bremskraftverstärkers und der Abstand zwischen dem dem Anschlag 62 zugewandten Ende des äußeren Kolbens 52 und dem Anschlag 62 verringert sich.

Bei weiter erhöhter Eingangskraft gelangt schließlich das dem Anschlag 62 zugewandte Ende des äußeren Kolbens 52 in Kontakt mit dem Anschlag 62, was zur "Erdung" des äußeren Kolbens 52 führt, d.h. die mit der Reaktionsscheibe 34 in Kontakt stehende Fläche des äußeren Kolbens 52 hat nun keinen Einfluss mehr auf das Kraftverstärkungsverhältnis des Bremskraftverstärkers 10. Dies entspricht in Fig. 5 dem Punkt C. Wirksam ist jetzt nur noch die kleinere Fläche des inneren Kolbens 50, so dass sich das Kraftverstärkungsverhältnis des Bremskraftverstärkers 10 nunmehr aus dem Verhältnis des Außendurchmessers des inneren Kolbens 50 zum Innendurchmesser des becherförmigen Endabschnittes 36 ergibt. Da der Außendurchmesser des inneren Kolbens 50 kleiner als Außendurchmesser des äußeren Kolbens 52 ist, nimmt das Kraftübersetzungsverhältnis, wie aus Fig. 5 ersichtlich ist, zu.

Bei einer weiteren Erhöhung der Eingangskraft dringt der innere Kolben 50 noch tiefer in die Reaktionsscheibe 34 ein, bis ein mit dem Ventilkolben 26 verbundener, sich in eine radiale Ausnehmung des Steuerventilgehäuses 28 erstreckender Riegel 66 gegen das Steuerventilgehäuse 28 stößt. Dies entspricht in Fig. 5 dem Punkt D. Eine weitere Erhöhung der Eingangskraft kann dann vom Bremskraftverstärker 10 nicht mehr verstärkt werden, und führt deshalb zu einem entsprechend geringeren Anstieg des Hauptzylinderdrucks.

Aus der vorhergehenden Funktionsbeschreibung ist ersichtlich, dass die Steigung und der Verlauf der in Fig. 5 wiedergegebenen Kurve zwischen den Punkten B und C von der Charakteristik der Druckfeder 48 abhängt. Die Steigung des genannten Abschnittes der Kurve kann durch unterschiedliche Federsteifigkeiten beeinflusst werden, wobei solche unterschiedlichen Federsteifigkeiten sogar in ein und derselben Druckfeder 48 vorhanden sein können (progressive Federkennlinie), um den Verlauf des Kraftverstärkungsverhältnisses in dem genannten Kurvenabschnitt in einer gewünschten Weise zu beeinflussen.

Beim Lösen der Bremse werden die beschriebenen Stellungen der Einrichtung 30 in umgekehrter Richtung durchlaufen. Dabei folgt die in Fig. 5 dargestellte Kurve nacheinander den Punkten D', C', B' und A'. Wie Fig. 5 entnommen werden kann, stimmt die Lage des Punktes A nicht mit der Lage des Punktes A' überein. Gleiches gilt für die Punkte B und B', C und C' sowie D und D'. Der eingangskraftabhängige Verlauf des Bremsdrucks im Hauptzylinder weist folglich Hysterese-Erscheinungen auf.

Bei einem Bremskraftverstärker des Stands der Technik ist aufgrund der starken Ablagerungen am Anschlag 60 für den inneren Kolben 50 der im Ausgangszustand des Bremskraftverstärkers normalerweise vorhandene Spalt s zwischen dem Anschlag 62 für den äußeren Kolben 52 und dem äußeren Kolben 52 vollständig aufgebraucht. Nach einer Bremsung mit hohen Bremsdrücken kann daher, wie in Fig. 5 durch die gestrichelte Linie dargestellt, der Bremsdruck nicht mehr kontrolliert zurückgenommen werden. Erst nach einer starken Reduzierung der Eingangskraft lässt sich die Bremskraftunterstützung des Bremskraftverstärkers abschalten, wobei das Abschalten schlagartig erfolgt. Der erfindungsgemäße Bremskraftverstärker weist dagegen bei gleicher Betriebsdauer ein deutlich besseres Betätigungsverhalten als Bremskraftverstärker des Stands der Technik auf.

## Patentansprüche

1. Pneumatischer Bremskraftverstärker (10), insbesondere für Kraftfahrzeuge, mit einem Steuerventil (22) zum Steuern einer pneumatischen Druckdifferenz, einem Krafteingangsglied (24) zur Betätigung des Steuerventils (22), einem Kraftabgabeglied (38) zur Weiterleitung der Bremskraft, einer zwischen dem Kraftabgabeglied (38) und dem Krafteingangsglied (24) angeordneten Reaktionsscheibe (34) aus Elastomermaterial, und einer zwischen der Reaktionsscheibe (34) und dem Krafteingangsglied (24) angeordneten, auf die Reaktionsscheibe (34) wirkenden Einrichtung (30) zur Änderung des Kraftübersetzungsverhältnisses zwischen dem Krafteingangsglied (24) und dem Kraftabgabeglied (38) in Abhängigkeit von der auf das Krafteingangsglied (24) ausgeübten Kraft, welche einen inneren Kolben (50) und einen den inneren Kolben (50) radial außen umgebenden und relativ zum inneren Kolben (50) verschiebbaren äußeren Kolben (52) umfasst,
**dadurch gekennzeichnet, dass** der innere Kolben (50) radial außen oder der äußere Kolben (52) radial innen eine Vertiefung (50', 52") zur Aufnahme von Materialpartikeln aufweist, welche von dem der Vertiefung (50', 52") jeweils gegenüberliegenden Kolben (50, 52) abgedeckt ist.

2. Bremskraftverstärker nach Anspruch 1,
**dadurch gekennzeichnet, dass** die Vertiefung eine in Umfangsrichtung des Kolbens (50, 52) verlaufende Nut (50', 52") ist.

3. Bremskraftverstärker nach Anspruch 1 oder 2,
**dadurch gekennzeichnet, dass** der innere Kolben (50) an seinem dem Krafteingangsglied (24) zugewandten Ende mit einem Stößel (42) verbunden ist.

4. Bremskraftverstärker nach Anspruch 3,
**dadurch gekennzeichnet, dass** der äußere Kolben (52) auf einem Schaft (44) des Stößels (42) gleitend verschiebbar geführt ist.

5. Bremskraftverstärker nach Anspruch 3 oder 4,
**dadurch gekennzeichnet, dass** der innere Kolben (50) und der Stößel (42) einstückig ausgeführt sind.

6. Bremskraftverstärker nach einem der Ansprüche 3 bis 5,
**dadurch gekennzeichnet, dass** der Schaft (42) des Stößels (44) an seinem dem Krafteingangsglied (24) zugewandten Ende einen Teller (46) aufweist.

7. Bremskraftverstärker nach einem der Ansprüche 1 bis 6,
**dadurch gekennzeichnet, dass** der äußere Kolben (52) radial innen einen Anschlag (60) aufweist, welcher eine axiale Verschieblichkeit des inneren Kolbens (50) relativ zum äußeren Kolben (52) entgegen der Betätigungsrichtung des Bremskraftverstärkers (10) begrenzt.

8. Bremskraftverstärker nach Anspruch 7,
**dadurch gekennzeichnet, dass** der innere Kolben (50) in einer Ausgangsstellung des Bremskraftverstärkers (10) gegen den Anschlag (60) des äußeren Kolbens (52) vorgespannt ist.

9. Bremskraftverstärker nach Anspruch 8,
**dadurch gekennzeichnet, dass** ein elastisches Element (48) zur Erzeugung der Vorspannung vorhanden ist, welches sich mit einem ersten Ende am äußeren Kolben (52) und mit einem zweiten Ende am Stößel (42) abstützt.

10. Bremskraftverstärker nach einem der Ansprüche 6 bis 9,
**dadurch gekennzeichnet, dass** das Teller (46) und der Schaft (42) als getrennte Komponenten ausgestaltet sind.

11. Bremskraftverstärker nach einem der Ansprüche 1 bis 10,
**dadurch gekennzeichnet, dass** ein Anschlag (62) für den äußeren Kolben (54) an einem Gehäuse (12) des Steuerventils (22) ausgebildet ist.

12. Bremskraftverstärker nach einem der Ansprüche 1 bis 11,
**dadurch gekennzeichnet, dass** die Einrichtung (30) zur Änderung des Kraftübersetzungsverhältnisses als vormontierbare Einheit in Gestalt einer Patrone ausgeführt ist, die nach erfolgter Vormontage in das Gehäuse (12) des Steuerventils (22) einsetzbar ist.

## Claims

1. A pneumatic brake booster (10), in particular for motor vehicles, comprising a control valve (22) for controlling a pneumatic pressure difference, a force input element (24) for actuating the control valve (22), a force output element (38) for transmitting the braking force, a reaction disk (34) of elastomeric material disposed between the force output element (38) and the force input element (24), and a unit (30) disposed between the reaction disk (34) and the force input element (24) and acting upon the reaction disk (34) for altering the force transmission ratio between the force input element (24) and the force output element (38) in dependence upon the force exerted on the force input element (24), the unit (30) comprising an inner piston (50) and an outer piston (52) surrounding a radially outer side of the inner piston (50) and displaceable relative to the inner piston (50),
**characterised in that** the inner piston (50) has at the radially outer side or the outer piston (52) at the radially inner side a depression (50', 52') for receiving material particles, which depression (50', 52') is covered by the in each case oppositely located piston (50, 52).

2. The brake booster according to claim 1,
**characterised in that** the depression is a groove (50', 52') extending in peripheral direction of the piston (50, 52).

3. The brake booster according to claim 1 or 2,
**characterised in that** the inner piston (50) is connected at its end facing the force input element (24) to a plunger (42).

4. The brake booster according to claim 3,
**characterised in that** the outer piston (52) is guided so as to be slidingly displaceable on a shank (44) of the plunger (42).

5. The brake booster according to claim 3 or 4,
**characterised in that** the inner piston (50) and the plunger (42) are of an integral construction.

6. The brake booster according to one of claims 3 to 5,
**characterised in that** the shank (44) of the plunger (42) has at its end facing the force input element (24) a dish (46).

7. The brake booster according to one of claims 1 to 6,
**characterised in that** the outer piston (52) has a stop (60) radially at the inside, which limits an axial displaceability of the inner piston (50) relative to the outer piston (52) counter to the actuating direction of the brake booster (10).

8. The brake booster according to claim 7,
**characterised in that**, in an initial position of the brake booster (10), the inner piston (50) is preloaded towards the stop (60) of the outer piston (52).

9. The brake booster according to claim 8,
**characterised in that** an elastic element (48) for generating the initial tension is provided, which rests with a first end on the outer piston (52) and with a second end on the plunger (42).

10. The brake booster according to one of claims 6 to 9,
**characterised in that** the dish (46) and the shank (42) are constructed as separate components.

11. The brake booster according to one of claims 1 to 10,
**characterised in that** a stop (62) for the outer piston (54) is formed on a housing (28) of the control valve (22).

12. The brake booster according to one of claims 1 to 11,
**characterised in that** the device (30) for altering the force transmission ratio is designed as a preassembly unit in the form of a cartridge which, after preassembly has been effected, is insertable into the housing (12) of the control valve (22).

## Revendications

1. Servofrein pneumatique (10), en particulier pour véhicules à moteur, comprenant une soupape de commande (22) pour commander une différence de pression pneumatique, un élément d'entrée de force (24) pour actionner la soupape de commande (22), un élément de sortie de force (38) pour transmettre la force de freinage, un disque de réaction (34) en un matériau élastomère disposé entre l'élément de sortie de force (38) et l'élément d'entrée de force (24), et un dispositif (30) placé entre le disque de réaction (34) et l'élément d'entrée de force (24) et agissant sur le disque de réaction (34) pour changer le rapport de démultiplication de force entre l'élément d'entrée de force (24) et l'élément de sortie de force (38) en fonction de la force agissant sur l'élément d'entrée de force (24), ce dispositif (30) comprenant un piston intérieur (50) et un piston extérieur (52) entourant le piston intérieur (50) radialement à l'extérieur et translatable relativement au piston intérieur (50), **caractérisé en ce que** le piston intérieur (50) comprend radialement à l'extérieur, ou le piston extérieur (52) radialement à l'intérieur, un évidement (50', 52") pour recevoir des particules de matériel et qui est recouvert par le piston (50, 52) faisant face à l'évidement (50', 52").

2. Servofrein selon la revendication 1, **caractérisé en ce que** l'évidement est une rainure (50', 52") s'étendant sur la périphérie du piston (50, 52).

3. Servofrein selon la revendication 1 ou 2, **caractérisé en ce que** l'extrémité du piston intérieur (50) faisant face à l'élément d'entrée de force (24) est reliée à un poussoir (42).

4. Servofrein selon la revendication 3, **caractérisé en ce que** le piston extérieur (52) est guidé de manière coulissante sur une tige (44) du poussoir.

5. Servofrein selon la revendication 3 ou 4, **caractérisé en ce que** le piston intérieur (50) et le poussoir (42) consistent en une pièce.

6. Servofrein selon l'une des revendications 3 à 5, **caractérisé en ce que** la tige (42) du poussoir (44) présente, à son extrémité dirigée vers l'élément d'entrée de force (24), une assiette (46).

7. Servofrein selon l'une des revendications 1 à 6, **caractérisé en ce que** le piston extérieur (52) comprend radialement à l'intérieur une butée (60) qui limite un déplacement axial du piston intérieur (50) par rapport au piston extérieur (52) dans le sens opposé à la direction d'actionnement du servofrein (10).

8. Servofrein selon la revendication 7, **caractérisé en ce que** le piston intérieur (50) est précontraint contre la butée (60) du piston extérieur (52) dans une position de départ du servofrein (10).

9. Servofrein selon la revendication 8, **caractérisé en ce qu'**un élément élastique (48) pour créer la précontrainte est prévu, élément dont la première extrémité s'appuie sur le piston extérieur (52) et la seconde extrémité sur le poussoir (42).

10. Servofrein selon l'une des revendications 6 à 9, **caractérisé en ce que** l'assiette (46) et la tige (42) sont formés comme composants séparés.

11. Servofrein selon l'une des revendications 1 à 10, **caractérisé en ce qu'**une butée (62) pour le piston extérieur (54) est agencée sur un boîtier (12) de la soupape de commande (22).

12. Servofrein selon l'une des revendications 1 à 11, **caractérisé en ce que** le dispositif (30) pour changer le rapport de démultiplication de force est construit comme sous-groupe pré-assemblé ayant la forme d'une cartouche qui peut être insérée après pré-assemblage dans le boîtier (12) de la soupape de commande (22).
